Europäisches Patentamt

European Patent Office

Office européen des brevets

(11) Publication number: 0 249 272
A2

# EUROPEAN PATENT APPLICATION

(21) Application number: 87201004.6

(22) Date of filing: 29.05.87

(51) Int. Cl.⁴: **F16G 13/06**

(30) Priority: 13.06.86 IT 2225386 U

(43) Date of publication of application:
16.12.87 Bulletin 87/51

(84) Designated Contracting States:
AT BE CH DE ES FR GB GR IT LI LU NL SE

(71) Applicant: SOCIETA' ITALIANA CATENE
CALIBRATE REGINA S.p.A.
Viale Fulvio Testi 188
I-20092 Cinisello Balsamo Milano(IT)

(72) Inventor: Ancarani Restelli, Amedeo
Via Monza 80
22052 Cernusco Lombardone Como(IT)

(74) Representative: Faraggiana, Vittorio, Dr. Ing.
et al
Ingg. Guzzi e Ravizza S.r.l. Via Boccaccio, 24
I-20123 Milano(IT)

(54) Improved drive chain for cycles.

(57) A drive chains for cycles comprises an alternation of reciprocally pivoted outer links and inner plates, wherein the said pivoting system comprises a pin fixed to the plates of the outer link onto which the inner plates are directly articulated, there being also a roller rotating on the said pin, which is intended to be engaged by a chain wheel.

# Fig.2

## IMPROVED DRIVE CHAIN FOR CYCLES

The present invention relates to an improved drive chain for cycles, in particular bicycles.

Bicycle drive chains of the type currently used consist of an alternation of reciprocally pivoted outer an inner links.

The pivoting is realized between a pin solid with the plates of the outer links and a core solid with the plates of the inner links. In addition, on each core there rotates a roller which come into contact with the bicycle chain wheel. The link plates can have various types of configuration. A chain of the type outlined above is for example described and illustrated in British Patent Application No. 2 000 846.

Such chains, though satisfactory in operation, are somewhat complex to manufacture and thus also costly; in addition they are relatively heavy, bearing in mind that -especially in the racing sector-each particular of the bicycle is made as lightweight as possible so as to minimize the overall weight of the vehicle.

The object of the present invention, therefore, is to embody a drive chain for cycles that is lighter-in-weight and constructionally more straightforward than the chains of known type.

To attain such object the present invention embodies a drive chain for cycles of the type comprising an alternation of reciprocally pivoted outer links and inner plates, wherein the said pivoting system comprises a pin fixed to the plates of the outer link on which the inner plates are directly articulated, there being also a roller, rotating on the said pin, which is intended to be engaged by a chain wheel.

The structural and functional characteristics of the invention, and its advantages over the known art, will become more apparent from an examination of the following description, referred to the appended drawings, which show one embodiment of a drive chain for cycles based on the principles of the invention.

In the drawings:

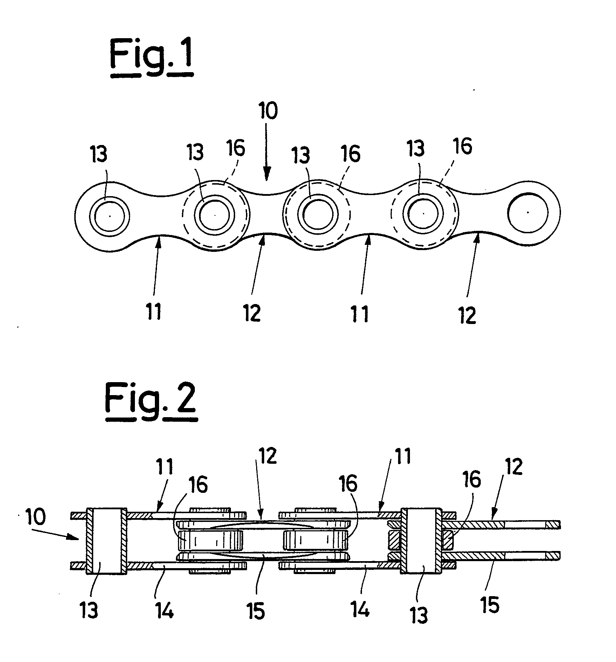

Figure 1 is a side elevation of the said chain; and

Figure 2 is a longitudinal sectional view of the chain in Figure 1.

With reference to the drawings the drive chain of the invention is indicated overall by 10 and comprises an alternation of reciprocally pivoted outer links 11 and inner links 12.

According to the invention, the pivoting between the links 11, 12 is implemented by a pin which in the example shown has the form of a core 13 fixed to the plates 14 of the outer links 11 onto which the plates 15 of the inner links 12 are directly articulated. Between the plates 15 there rotates on the core 13 a roller 16 which holds the plates 15 in place and which also serves as a transversal spacer element. The rollers 16 are intended to be engaged in a conventional manner by a chain wheel (not shown) of the bicycle wheel.

From the foregoing description it is apparent that, with such a drive chain structure, the core which in conventional chains connected the flanges of the inner links is eliminated, as also the relative mounting operation.

The result so achieved is a chain which is overall lighter-in-weight and transversally less rigid, and these two improvements facilitate the change gear operation on multiple free wheels.

## Claims

1) Drive chains for cycles of the type comprising an alternation of reciprocally pivoted outer links and inner plates, wherein the said pivoting system comprises a pin fixed to the plates of the outer link onto which the inner plates are directly articulated, there being also a roller rotating on the said pin, which is intended to be engaged by a chain wheel.

2) Drive chain as described in claim 1, wherein the said pin has the form of a core.

## Fig.1

## Fig.2